# EUROPÄISCHE PATENTSCHRIFT

(11) **EP 3 056 788 B1**
(45) Veröffentlichungstag und Bekanntmachung des Hinweises auf die Patenterteilung: **18.10.2017**
(21) Anmeldenummer: 16152801.3
(22) Anmeldetag: 26.01.2016
(51) Int. Cl.: F16L 55/26, G03B 37/00, F16L 55/28, F16H 19/08

(54) **ABLENKEINRICHTUNG FÜR INSPEKTIONSSYSTEME**
DEFLECTION DEVICE FOR INSPECTION SYSTEMS
DISPOSITIF DE DEVIATION POUR DES SYSTEMES D'INSPECTION

(30) Priorität: 13.02.2015 DE 202015100712 U
(43) Veröffentlichungstag der Anmeldung: 17.08.2016
(73) Patentinhaber: iPEK International GmbH, 87477 Sulzberg (DE)
(72) Erfinder: Kiesel, Marvin, 87561 Oberstdorf (DE); Pomp, Dominik, 87448 Waltenhofen (DE)
(74) Vertreter: 2s-ip Schramm Schneider Bertagnoll Patent- und Rechtsanwälte Part mbB

(56) Entgegenhaltungen:
- EP-A1- 2 073 058
- DE-U1-202011 004 982

## Beschreibung

### Gebiet der Erfindung

Die Erfindung betrifft eine Ablenkeinrichtung zum Ablenken eines Arbeitsmittels eines Inspektions- und/oder Wartungssystems, sowie ein Inspektions- und/oder Wartungssystem mit einer erfindungsgemäßen Ablenkeinrichtung.

### Hintergrund der Erfindung

Zur Durchführung von Rohr- bzw. Kanalinspektionen oder Kanalreinigungs- bzw. Wartungsarbeiten ist es bekannt, sogenannte Kanalinspektions- und/oder Wartungssysteme zu verwenden, die in das zu inspizierende bzw. zu wartende Rohr bzw. Kanalrohr eingebracht werden können und im Kanalrohr bewegt, etwa verfahren oder vorgeschoben werden können. Ein Hausanschlusskanal ist in der Regel ein stark verzweigtes Rohrnetz, das in einen Hauptkanal mündet, in dem die Kanalinspektions- und/oder Wartungssysteme eingeführt werden.

Die Inspektions- bzw. Wartungssysteme müssen hierbei so ausgestaltet sein, dass diese von dem Hauptkanal aus in einen Nebenkanal abzweigen können, um auch den Nebenkanal inspizieren bzw. warten zu können.

Bekannte Inspektions- bzw. Reinigungssysteme verwenden hierzu Leit- und/oder Abdrückvorrichtungen, die über die Kontur des vorderen Endes des Inspektions- bzw. Wartungssystems hinausragen und relativ zum Inspektions- bzw. Wartungssystem verschwenkt werden können.

Ein derartiges System ist beispielsweise aus der DE 203 17 314 U1 bekannt. An dem vorderen Ende des Inspektionssystems ist hier eine Kameraeinheit angeordnet, die um eine in Vorschubrichtung verlaufende Achse drehbar ist, wobei an einem Drehmechanismus ein Lenkstäbchen befestigt ist. Beim Anfahren eines Seitenkanals wird der Drehmechanismus so gedreht, dass das Lenkstäbchen zumindest teilweise in den Seitenkanal hinein ragt, sodass sich das Lenkstäbchen bei einem weiteren Vorschub des Inspektionssystems an der Seitenwand des Seitenkanals abstützt und somit ein Abbiegen des Inspektionssystems in den Seitenkanal hinein bewirkt.

Aus der DE 101 02 056 A1 ist eine Satellitenkamera eines Rohrinspektionssystems bekannt, an der eine Leitvorrichtung angeordnet ist, die zur Umlenkung der Satellitenkamera vorgesehen ist. Die Leitvorrichtung ist als eine über den Außenumriss der Satellitenkamera hinaus verfahrbare Abdrückvorrichtung ausgestaltet.

Derartige Systeme haben allerdings den Nachteil, dass die über die Kamerakontur hinausragende Leit- bzw. Lenkvorrichtung im Blickwinkel des Kamerabildes liegen können und dadurch die Inspektion negativ beeinflussen können. Zudem können diese Leit- bzw. Lenkvorrichtungen die Beweglichkeit, beispielsweise eines Kamerakopfes negativ beeinflussen.

Sofern anstelle eines Kamerakopfes ein Werkzeug, etwa eine Greifvorrichtung oder ein Fräswerkzeug, vorgesehen ist, kann die Leitvorrichtung sogar verhindern, dass das Werkzeug an die zu bearbeitende Stelle gelangen kann, wenn nicht entsprechende Mittel vorgesehen sind, mit denen der Lenkstab eingefahren oder weggeklappt werden kann.

Aus der DE 20 2011 004 982 U1 ist eine ablenkbare Inspektionseinrichtung bekannt, wobei eine Ablenkeinrichtung der Inspektionseinrichtung ein Arbeitsmittel mit einem Grundkörper und einem Rotor aufweist, wobei der Rotor um eine Achse relativ zum Grundkörper schwenkbar an dem Grundkörper angeordnet ist, wobei die Ablenkeinrichtung eine konische Spezialfeder, mit einem ersten Ende und einem zweiten Ende aufweist, wobei der Grundkörper an dem ersten Ende angeordnet ist, und wobei die Ablenkeinrichtung ein Zugmittel mit einem ersten Ende und einem zweiten Ende aufweist, wobei das erste Ende des Zugmittels an dem Arbeitsmittel befestigt ist.

### Aufgabe der Erfindung

Der Erfindung liegt daher die Aufgabe zugrunde, die aus dem Stand der Technik bekannten Nachteile zumindest teilweise zu vermeiden und Lösungen bereitzustellen, mit denen es möglich ist, besser und einfacher aus einem Hauptkanal in einen Nebenkanal abzubiegen, ohne hierbei die Funktion der Inspektions- und/oder Wartungseinheiten negativ zu beeinflussen. Des Weiteren soll die Lösung konstruktiv einfach sein.

### Erfindungsgemäße Lösung

Erfindungsgemäß wird diese Aufgabe mit einer Ablenkvorrichtung einer Inspektionseinrichtung sowie mit einem Inspektions- und/oder Wartungssystem nach den unabhängigen Ansprüchen gelöst. Vorteilhafte Weiterbildungen und Ausgestaltungen der Erfindung sind in den jeweiligen abhängigen Ansprüchen angegeben.

Bereitgestellt wird demnach eine Ablenkeinrichtung einer Inspektionseinrichtung, wobei die Ablenkeinrichtung aufweist:
- ein Arbeitsmittel mit einem Grundkörper und einer Schwenkeinrichtung,
- eine flexible Befestigungseinrichtung mit einem ersten Ende und mit einem zweiten Ende, wobei der Grundkörper vorzugsweise lösbar an dem ersten Ende angeordnet ist, und
- ein Zugmittel mit einem ersten Ende und mit einem zweiten Ende, wobei das erste Ende des Zugmittels an der Schwenkeinrichtung befestigt ist und
wobei
- das zweite Ende des Zugmittels im Bereich des zweiten Endes der Befestigungseinrichtung befestigt ist,
- der Grundkörper ein Kameragehäuse umfasst, wobei die Schwenkeinrichtung um eine Schwenkachse relativ zum Gehäuse schwenkbar an dem oder in dem Kameragehäuse angeordnet ist, und
- das Arbeitsmittel einen Kamerakopf umfasst, wobei die Schwenkeinrichtung ein Objektiv und einen Bildaufnehmer aufweist. Damit kann durch eine Schwenkbewegung der Schwenkeinrichtung das Zugmittel betätigt werden, um durch eine dadurch bewirkte Auslenkkraft die Inspektionseinrichtung bzw. das Arbeitsmittel auszulenken, um so ein Abbiegen der Inspektionseinrichtung in einen Seitenkanal eines Hauptkanals zu ermöglichen. Damit werden in vorteilhafter Weise bereits an der Inspektionseinrichtung vorhandene Antriebsmittel genutzt, um das Auslenken der Inspektionseinrichtung zu bewirken. Zusätzliche Antriebsmittel, die ausschließlich für das Auslenken der Inspektionseinrichtung vorgesehen sind, können so vermieden werden, sodass der konstruktive Mehraufwand für die Realisierung der Auslenkung der Inspektionseinrichtung niedrig gehalten werden kann.

An dem zweiten Ende der Befestigungseinrichtung kann eine Rotationseinrichtung angeordnet sein, wobei das zweite Ende des Zugmittels an der Rotationseinrichtung befestigt ist.

In einer Ausgestaltung der Erfindung können das Arbeitsmittel oder das Gehäuse um die Längsachse der Befestigungseinrichtung rotierbar an der Befestigungseinrichtung angeordnet sein. Damit kann die Inspektionseinrichtung in verschiedene Richtungen ausgelenkt bzw. abgelenkt werden. Das Arbeitsmittel bzw. das Gehäuse muss lediglich so rotiert werden, dass der Bereich, in dem das Zugmittel an der Schwenkeinrichtung befestigt ist, in die gewünschte Auslenkrichtung zeigt.

In einer Ausgestaltung der Erfindung kann zudem die Rotationseinrichtung um die Längsachse der Befestigungseinrichtung rotierbar an der Befestigungseinrichtung angeordnet sein.

Vorteilhaft ist hierbei, wenn die Rotationseinrichtung und das Arbeitsmittel oder das Gehäuse synchron um die Längsachse der Befestigungseinrichtung rotierbar sind. Damit wird in vorteilhafter Weise vermieden, dass sich das Zugmittel bei einer mehrfachen Umdrehung des Kamerakopfes um die Befestigungseinrichtung aufwickelt.

In einer Ausgestaltung der Erfindung kann das Zugmittel ein Zugseil umfassen. Das Zugseil kann aus unterschiedlichen Materialien bestehen. Vorteilhaft ist es allerdings, wenn das Zugseil aus einem stabilen, abriebfesten Material hergestellt ist.

In einer Ausgestaltung der Erfindung kann die Rotationseinrichtung axial bewegbar an dem zweiten Ende der Befestigungseinrichtung angeordnet sein. Damit kann beispielsweise gewährleistet werden, dass das Zugmittel bzw. das Zugseil im nicht ausgelenkten Zustand der Inspektionseinrichtung immer leicht vorgespannt ist.

An der Befestigungseinrichtung kann zwischen der Rotationseinrichtung und dem ersten Ende ein Anschlag angeordnet sein, der die axiale Bewegung der Rotationseinrichtung in Richtung Arbeitsmittel begrenzt.

Dadurch wird gewährleistet, dass bei einer Schwenkbewegung des Schwenkkopfes bzw. der Schwenkeinrichtung die Rotationseinrichtung einen Mindestabstand zum Kamerakopf aufweist, um zu gewährleisten, dass durch die vollzogene Schwenkbewegung des Schwenkkopfes über das Zugmittel eine Ablenkkraft zum Ablenken der Inspektionseinrichtung bereitgestellt wird.

In einer Ausgestaltung der Erfindung bewirkt ein Schwenken der Schwenkeinrichtung um die Schwenkachse ein Auslenken des ersten Endes der Befestigungseinrichtung aus der Längsachse der Inspektionseinrichtung. Weil der Kamerakopf bzw. das Arbeitsmittel an dem ersten Ende der Befestigungseinrichtung angeordnet ist, wird auch der Kamerakopf bzw. das Arbeitsmittel entsprechend ausgelenkt. Vorteilhaft ist es, wenn die Befestigungseinrichtung eine Rückstellkraft aufweist, die entgegen einer durch ein Schwenken der Schwenkeinrichtung um die Schwenkachse bewirkten Auslenkkraft wirkt. Damit wird auf konstruktiv einfache Weise gewährleistet, dass bei einem Zurückschwenken der Schwenkeinrichtung die Befestigungseinrichtung bzw. das Arbeitsmittel wieder in ihre Ausgangsposition zurückkehren können. Die Ausgangsposition ist hierbei jene Position, bei der mittels der Schwenkeinrichtung die Inspektionseinrichtung mit keiner Auslenkkraft beaufschlagt wird.

In einer Ausgestaltung der Erfindung kann die Befestigungseinrichtung als Stab ausgebildet sein.

Als vorteilhaft hat sich herausgestellt, wenn das erste Ende des Zugmittels lösbar an der Schwenkeinrichtung befestigbar ist. Vorteilhaft ist zudem, wenn das zweite Ende des Zugmittels lösbar an der Rotationseinrichtung befestigbar ist. Damit kann das Zugmittel von der Inspektionseinrichtung abgenommen werden, sofern lediglich Kanalinspektionen vorgenommen werden, bei denen die Inspektionseinrichtung nicht abgelenkt werden muss.

In einer weiteren Ausgestaltung der Erfindung kann das Gehäuse lösbar an dem ersten Ende der Befestigungseinrichtung befestigbar sein. Damit kann der Kamerakopf auch für andere Inspektionssysteme wiederverwendet werden. Beispielsweise kann der Kamerakopf an einem Fahrwagen eines Inspektionssystems befestigt werden.

In einer Ausgestaltung der Erfindung ist es vorgesehen, an dem zweiten Ende der Befestigungseinrichtung Befestigungsmittel vorzusehen, um die Inspektionseinrichtung, vorzugsweise lösbar, an einem Inspektions- und/oder Wartungssystem zu befestigen.

An dem zweiten Ende der Befestigungseinrichtung kann ein Schiebestab oder ein Schiebeaal angeordnet, vorzugsweise lösbar angeordnet sein.

Als besonders vorteilhaft hat sich herausgestellt, wenn die Schwenkeinrichtung ein Objektiv und einen Bildaufnehmer aufweisen.

Die Ablenkeinrichtung kann eine erste Antriebseinheit aufweisen, um die Schwenkeinrichtung um die Schwenkachse relativ zum Gehäuse zu schwenken bzw. zu drehen.

Die Ablenkeinrichtung kann ferner eine zweite Antriebseinheit aufweisen, um das Arbeitsmittel oder das Gehäuse um die Längsachse der Befestigungseinrichtung zu rotieren.

Bereitgestellt wird durch die Erfindung ferner ein Inspektions- und/oder Wartungssystem, insbesondere Kanalinspektions- und/oder Wartungssystem, aufweisend eine erfindungsgemäße Ablenkeinrichtung.

Das Inspektions- und/oder Wartungssystem kann als Schiebesystem ausgebildet sein, wobei an einem vorderen Ende eines Schiebestabes oder eines Schiebeaals die Ablenkeinrichtung angeordnet, vorzugsweise lösbar angeordnet ist.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: zwei Abbildungen einer erfindungsgemäßen Ablenkeinrichtung einer Inspektionseinrichtung, wobei in Abbildung (a) die Inspektionseinrichtung in ihrer Ausgangsposition und in Abbildung (b) die Inspektionseinrichtung in einer ausgelenkten bzw. abgelenkten Position gezeigt sind; und
- Fig. 2: ein Anwendungsbeispiel für die Verwendung der erfindungsgemäßen Ablenkeinrichtung.

### Detaillierte Beschreibung der Erfindung

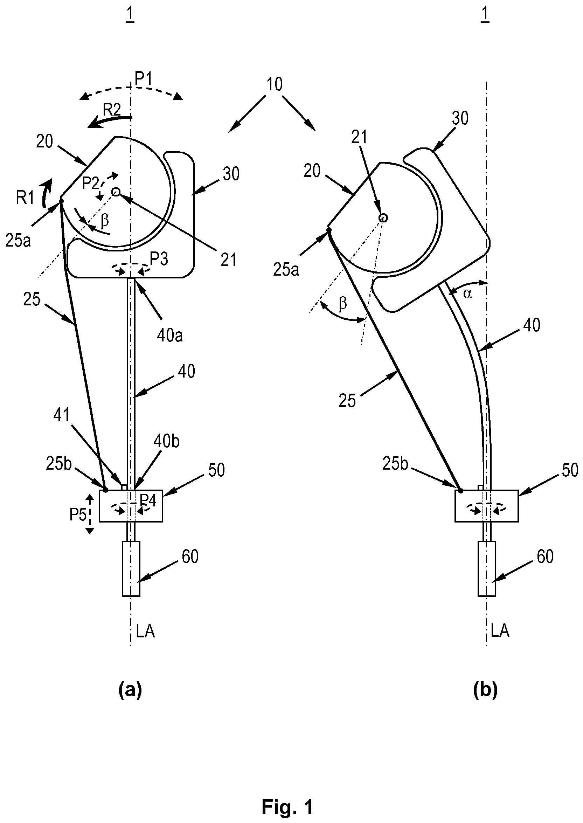

Fig. 1 zeigt eine erfindungsgemäße Ablenkeinrichtung einer Inspektionseinrichtung 1 in einer Schnittansicht. In Abbildung (a) ist die Inspektionseinrichtung 1 in ihrer Normalposition bzw. Ausgangsposition gezeigt, das heißt in einer Stellung bzw. Position, bei der die Inspektionseinrichtung nicht abgelenkt bzw. ausgelenkt ist. In Abbildung (b) ist die Inspektionseinrichtung in einer ausgelenkten bzw. abgelenkten Stellung gezeigt. Die für das Auslenken bzw. Ablenken erfindungsgemäß vorgesehenen Mittel sowie die Funktionsweise der Ablenkeinrichtung werden nachfolgend näher beschrieben.

Die Ablenkeinrichtung weist ein Arbeitsmittel 10 mit einem Gehäuse 30 und einer Schwenkeinrichtung 20, eine Befestigungseinrichtung 40 und ein Zugmittel 25 auf. Anstelle des Gehäuses kann auch ein anderer Grundkörper, etwa eine Schwenkgabel, vorgesehen sein, an dem die Schwenkeinrichtung schwenkbar angeordnet ist.

Die Befestigungseinrichtung 40 ist hier als flexibler Stab ausgestaltet, der eine Rückstellkraft aufweist. Die Rückstellkraft des Stabes 40 kann beispielsweise mittels einer am bzw. im Stab angeordneten Rückstellfeder bereitgestellt werden. Alternativ kann eine Rückstellkraft des Stabes 40 auch dadurch bereitgestellt werden, indem der Stab 40 zumindest abschnittsweise ein Formgedächtnismaterial aufweist, welches mit einer Temperatur beaufschlagt werden kann. Bei Beaufschlagung des Formgedächtnismaterials mit einer vorbestimmten Temperatur wird der Stab in seine Normalposition bzw. Ausgangsposition zurückgebracht, wie in Abbildung (a) gezeigt.

Das Zugmittel 25 ist hier als Seil ausgestaltet, wobei das Seil vorzugsweise aus einem abriebfesten Material hergestellt ist, um ein Verschleißen des Seils 25 weitestgehend zu vermeiden. Zudem ist es vorteilhaft, wenn das Seil 25 bei Beaufschlagung einer Zugkraft seine Länge nicht verändert.

An dem ersten bzw. vorderen Ende 40a der Befestigungseinrichtung bzw. des Stabes 40 ist das Arbeitsmittel 10 angeordnet, wobei das Arbeitsmittel 10 hier als Kamerakopf ausgebildet ist. Der Kamerakopf 10 weist ein Gehäuse 30 und eine Schwenkeinrichtung 20 auf, wobei die Schwenkeinrichtung um die Schwenkachse 21 relativ zum Gehäuse 30 schwenkbar ist. Die mögliche Schwenk- bzw. Drehbewegung des Schwenkkopfes 20 ist hier mit dem Pfeil P2 gezeigt. Die Schwenkachse 21 verläuft hier senkrecht zur Längsachse LA der Inspektionseinrichtung 1.

In dem Schwenkkopf 20 sind hier das Objektiv und ein Bildaufnehmer einer Kamera bzw. Videokamera angeordnet.

An dem Schwenkkopf 20 ist ein erstes bzw. vorderes Ende 25a des Zugmittels 25 befestigt. Das zweite bzw. hintere Ende 25b des Zugmittels 25 ist an einer Rotationseinrichtung 50 befestigt, die am zweiten bzw. hinteren Ende 40b der Befestigungseinrichtung 40 angeordnet ist.

Durch ein Drehen bzw. Schwenken des Schwenkkopfes 20 um dessen Schwenkachse 21 in Richtung des Pfeils R1 wird das sich in der Länge nicht veränderbare Seil 25 mit einer Zugkraft beaufschlagt, sodass die Inspektionseinrichtung 1 bzw. der Stab 40 mit einer Ablenk- bzw. Auslenkkraft beaufschlagt wird. Diese Ablenk- bzw. Auslenkkraft bewirkt, dass der Stab 40 aus seiner in Abbildung (a) gezeigten Ausgangsstellung in eine abgelenkte bzw. ausgelenkte Stellung - wie in Abbildung (b) gezeigt - gebracht wird. Die durch die Rotationsbewegung R1 des Schwenkkopfes 20 bewirkte Schwenkrichtung des Kamerakopfes 10 ist mit dem Pfeil R2 gekennzeichnet.

Das Ablenken bzw. Auslenken des Stabes 40 aufgrund der Schwenkbewegung des Schwenkkopfes 20 wird dadurch sichergestellt, dass die Länge des Seils 25 nicht veränderbar ist. Durch die Schwenkbewegung R1 des Schwenkkopfes 20 vergrößert sich der Abstand zwischen dem Punkt, an dem das Seil 25 an dem Schwenkkopf 20 befestigt ist, und dem Punkt, an dem das Seil 25 an der Rotationseinrichtung 50 befestigt ist. Weil das Seil allerdings in seiner Länge nicht veränderbar ist, wird der Stab 40 in Richtung des Pfeils R2 ausgelenkt, sodass der Abstand der beiden Befestigungspunkte im Wesentlichen gleich bleibt.

Durch die erfindungsgemäße Ausgestaltung der Ablenkeinrichtung wird zudem weitestgehend gewährleistet, dass die optische Achse des Kamerakopfes während eines Ablenkvorgangs im Wesentlichen gleich bleibt, das heißt während eines Ablenkvorgangs immer in dieselbe Richtung verläuft. Dies hat den Vorteil, dass das Bedienpersonal immer jenen Bereich im Blick hat, wohin abgebogen werden soll. Zusammengefasst bedeutet dies, dass es vorteilhaft ist, wenn im ausgelenkten Zustand der Inspektionseinrichtung der Schwenkwinkel β des Schwenkkopfes 20 um die Schwenkachse 21 dem Ablenk- bzw. Auslenkwinkel α entspricht.

Bei der in Fig. 1 gezeigten Ausgestaltung einer erfindungsgemäßen Inspektionseinrichtung bzw. einer erfindungsgemäßen Ablenkeinrichtung ist das Arbeitsmittel bzw. der Kamerakopf 10 oder das Gehäuse bzw. das Kameragehäuse 30 um die Längsachse LA der Inspektionseinrichtung 1 bzw. des Stabes 40 rotierbar an dem ersten Ende 40a des Stabes 40 angeordnet. Die mögliche Rotationsbewegung ist mit dem Pfeil P3 gekennzeichnet. Dies hat den Vorteil, dass mittels Rotation des Kamerakopfes 10 bzw. des Kameragehäuses 30 die Ablenk- bzw. Auslenkrichtung festgelegt werden kann.

Um zu verhindern, dass bei einer Rotation des Kamerakopfes 10 bzw. des Kameragehäuses 30 um die Längsachse LA der Inspektionseinrichtung 1 die Inspektionseinrichtung 1 abgelenkt bzw. ausgelenkt wird, ist es vorgesehen, dass auch die Rotationseinrichtung 50 um die Längsachse LA des Stabes 40 rotierbar an dem zweiten bzw. hinteren Ende 40b des Stabes 40 angeordnet ist. Die Rotationseinrichtung 50 ist dabei so ausgestaltet, dass die Rotation der Rotationseinrichtung 50 synchron zu einer Rotation des Kamerakopfes 10 bzw. des Kameragehäuses 30 erfolgt. Durch diese synchrone Rotation ist gewährleistet, dass sich der Abstand der beiden Befestigungspunkte des Seils 25 während einer Rotation des Kamerakopfes 10 bzw. des Kameragehäuses 30 nicht verändert, sodass ein Auslenken verhindert wird.

Für die Rotation des Kamerakopfes 10 bzw. des Kameragehäuses 30 kann ein Antriebsmittel, etwa ein Schrittmotor, vorgesehen sein. Die Rotationseinrichtung 50 kann hingegen antriebslos an dem Stab 40 angeordnet sein, beispielsweise schwimmend gelagert sein. Alternativ kann auch für die Rotation der Rotationseinrichtung 50 ein Antriebsmittel, etwa ein Schrittmotor vorgesehen sein. In diesem Fall muss allerdings gewährleistet sein, dass das Antriebsmittel des Kamerakopfes synchron zum Antriebsmittel der Rotationseinrichtung 50 betrieben wird.

An dem hinteren bzw. zweiten Ende 40b des Stabes 40 kann ein Befestigungsmittel 60 vorgesehen sein, um die Inspektionseinrichtung an einem Schiebestab bzw. an einem Schiebeaal zu befestigen.

Ferner ist im Bereich des zweiten bzw. hinteren Endes 40b der Befestigungseinrichtung 40 zwischen der Rotationseinrichtung 50 und dem ersten bzw. vorderen Ende 40a der Befestigungseinrichtung 40 ein Anschlag 41 vorgesehen, der verhindert, dass die Rotationseinrichtung 50 über den Anschlag 41 hinaus in axialer Richtung zum Kamerakopf 10 verschoben werden kann. Damit ist gewährleistet, dass die Rotationseinrichtung 50 immer einen gewissen Mindestabstand zum Kamerakopf 10 aufweist. Vorteilhaft kann es sein, wenn die Rotationseinrichtung 50 in die entgegengesetzte Richtung axial verschiebbar ist. Damit kann beispielsweise gewährleistet werden, dass das Seil 25 auch in einer Ausgangsposition der Inspektionseinrichtung 1 immer eine gewisse Spannung aufweist. Zudem kann bei einer entgegengesetzten Bewegung der Rotationseinrichtung 50 (also von dem Kamerakopf 10 weg) ein Auslenken des Kamerakopfes 10 aus der Längsachse LA der Inspektionseinrichtung 1 bewirkt werden, ohne dass der Schwenkkopfe 20 um seine Schwenkachse 21 geschwenkt wird.

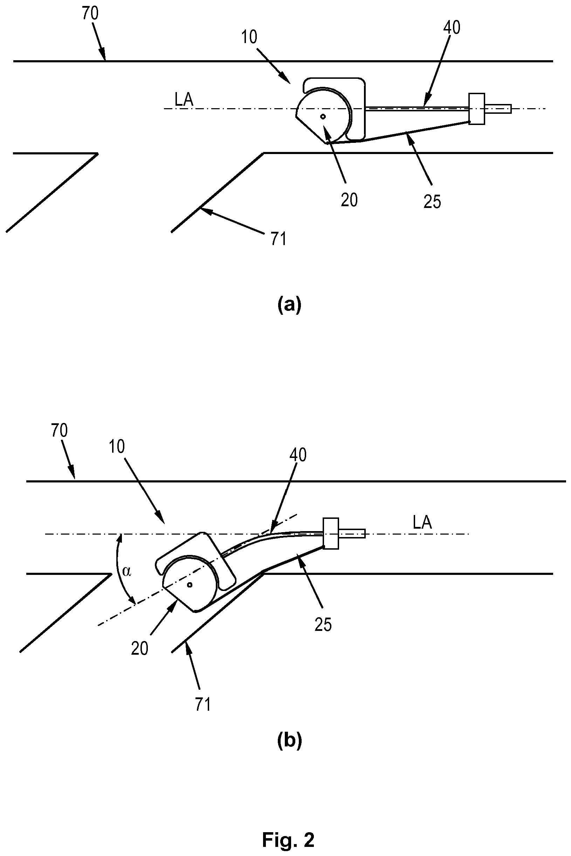

Fig. 2 zeigt ein Beispiel für die Anwendung einer erfindungsgemäßen Inspektionseinrichtung bzw. einer Inspektionseinrichtung mit einer erfindungsgemäßen Ablenkeinrichtung.

In Abbildung (a) ist eine Inspektionseinrichtung mit einer Ablenkeinrichtung gezeigt, die in einem Hauptrohr 70 angeordnet ist, von dem ein Nebenrohr 71 abzweigt. An dem vorderen Ende des Stabes 40 ist ein Kamerakopf 10 mit einem Schwenkkopf 20 angeordnet, wobei der Schwenkkopf 20 relativ zu dem Kameragehäuse des Kamerakopfes 10 schwenkbar ist, wie mit Bezug auf Fig. 1 erläutert. Die Inspektionseinrichtung soll aus dem Hauptrohr 70 in das Nebenrohr 71 abzweigen, um auch das Nebenrohr 71 inspizieren zu können.

In Abbildung (a) ist die Ablenkeinrichtung bzw. die Inspektionseinrichtung in einer Neutralstellung gezeigt, in der der Kamerakopf 10 gerade nach vorne ausgerichtet ist bzw. in der der Stab 40 im Wesentlichen parallel zur Längsachse des Hauptrohres 70 verläuft. In dieser Neutralstellung ist der Schwenkkopf 20 um einen Winkel β = 0 geschwenkt.

Die Abbildung (b) zeigt die in Abbildung (a) gezeigte Inspektionseinrichtung bzw. Ablenkeinrichtung, bei der das vorderer Ende des Stabes 40 aus seiner Neutralstellung ausgelenkt und in den Seitenkanal 71 eingelenkt ist.

Um die Inspektionseinrichtung aus der in Abbildung (a) gezeigten Neutralstellung in das Nebenrohr 71 abzulenken, wird der Schwenkkopf 20 um einen bestimmten Winkel β > 0 verschwenkt (vgl. Fig. 1, Abbildung (b)), sodass die Schwenkbewegung des Schwenkkopfs 20 eine Beaufschlagung des Seils 25 mit einer Zugkraft bewirkt. Aufgrund dieser Zugkraft wird das vordere Ende des Stabes 40 aus seiner Neutralstellung ausgelenkt, sodass auch der an dem vorderen Ende des Stabes 40 angeordnete Kamerakopf 10 aus der Neutralstellung ausgelenkt und in den Nebenkanal 71 eingelenkt wird.

Die Inspektionseinrichtung kann nunmehr in das Nebenrohr 71 eingeschoben werden. Sobald sich zumindest der Kamerakopf 10 in den Nebenrohr 71 befindet, kann der Schwenkkopf 20 wieder zurückgeschwenkt werden. Dieses Zurückschwenken bewirkt, dass die dem Zugseil 25 beaufschlagte Zugkraft reduziert wird und die Rückstellkraft des Stabes 40 den Kamerakopf 10 bzw. den Stab 40 wieder in ihre Neutralstellungen bringen. Die Inspektionseinrichtung 1 kann dann in dem Nebenrohr 71 weiter vorgeschoben werden, wobei sich die Inspektionseinrichtung in einer Neutralstellung befindet.

Sofern sich das Nebenrohr 71 nicht in der gleichen Richtung befindet, wie der Befestigungspunkt des Seils 25 an der Schwenkeinrichtung 20, kann der Kamerakopf 10 um seine Längsachse gedreht werden, bis der Befestigungspunkt des Seils 25 an dem Schwenkkopf 20 in Richtung des Nebenkanals 71 zeigt. Die Rotationseinrichtung 50 dreht sich synchron mit der Drehbewegung des Kamerakopfes mit. Nachdem der Kamerakopf bzw. der Befestigungspunkt des Seils 25 an dem Schwenkkopf korrekt ausgerichtet wurde, kann mit dem Abzweigvorgang begonnen werden, indem der Schwenkkopf 20 geschwenkt wird, wie vorstehend beschrieben.

### Bezugszeichen:

- 1: Inspektionseinrichtung
- 10: Kamerakopf der Inspektionseinrichtung 1
- 20: Schwenkkopf (Schwenkeinrichtung) des Kamerakopfes 10
- 21: Schwenkachse des Schwenkkopfes 20
- 25: Zugmittel (z.B. Seil)
- 25a: erstes (vordere) Ende des Zugmittels 25
- 25b: zweites (hintere) Ende des Zugmittels 25
- 30: Kameragehäuse des Kamerakopfes 10
- 40: flexible Befestigungseinrichtung mit Rückstellkraft (z.B. Stab mit Rückstellfeder)
- 40a: erstes (vordere) Ende der Befestigungseinrichtung 40
- 40b: zweites (hintere) Ende der Befestigungseinrichtung 40
- 41: Anschlag
- 50: Rotationseinrichtung (antriebslos gelagert)
- 60: Schiebestab bzw. Befestigungsmittel
- 70: Kanalrohr (Hauptrohr)
- 71: Kanalrohr (Nebenrohr)
- α: Ablenk- bzw. Auslenkwinkel
- β: Schwenkwinkel der Schwenkeinrichtung 20
- LA: Längsachse der Inspektionseinrichtung 1 bzw. der Befestigungseinrichtung 40
- P1: Auslenkbewegung des Kamerakopfes 10
- P2: Schwenkbewegung des Schwenkkopfes 20
- P3: Rotationsbewegung des Kamerakopfes 10 bzw. des Kameragehäuses 30
- P4: Rotationsbewegung der Rotationseinrichtung 50
- P5: axiale Bewegung der Rotationseinrichtung 50
- R1: Rotationsrichtung des Schwenkkopfes 20
- R2: Schwenkrichtung des Kamerakopfes 10

## Patentansprüche

1. Ablenkeinrichtung einer Inspektionseinrichtung (1), wobei die Ablenkeinrichtung aufweist:
- ein Arbeitsmittel (10) mit einem Grundkörper (30) und einer Schwenkeinrichtung (20),
- eine flexible Befestigungseinrichtung (40), mit einem ersten Ende (40a) und einem zweiten Ende (40b), wobei der Grundkörper (30) vorzugsweise lösbar an dem ersten Ende (40a) angeordnet ist, und
- ein Zugmittel (25) mit einem ersten Ende (25a) und einem zweiten Ende (25b), wobei das erste Ende (25a) des Zugmittels (25) an der Schwenkeinrichtung (20) befestigt ist,
**dadurch gekennzeichnet, dass**
- das zweite Ende (25b) des Zugmittels (25) im Bereich des zweiten Endes (40b) der Befestigungseinrichtung (40) befestigt ist,
- der Grundkörper (30) ein Kameragehäuse (30) umfasst, wobei die Schwenkeinrichtung (20) um eine Schwenkachse (21) relativ zum Kameragehäuse (30) schwenkbar (P2) an dem oder in dem Kameragehäuse (30) angeordnet ist, und
- das Arbeitsmittel (10) einen Kamerakopf umfasst, wobei die Schwenkeinrichtung (20) ein Objektiv und einen Bildaufnehmer aufweist.

2. Ablenkeinrichtung nach dem vorhergehenden Anspruch, wobei an dem zweiten Ende (40b) der Befestigungseinrichtung (40) eine Rotationseinrichtung (50) angeordnet ist und wobei das zweite Ende (25b) des Zugmittels (25) vorzugsweise lösbar an der Rotationseinrichtung (50) befestigt ist.

3. Ablenkeinrichtung nach einem der vorhergehenden Ansprüche, wobei das Arbeitsmittel (10) oder das Gehäuse (30) um die Längsachse (LA) der Befestigungseinrichtung (40) rotierbar (P3) an der Befestigungseinrichtung (40) angeordnet ist.

4. Ablenkeinrichtung nach einem der vorhergehenden Ansprüche 2 oder 3, wobei die Rotationseinrichtung (50) um die Längsachse (LA) der Befestigungseinrichtung (40) rotierbar (P4) an der Befestigungseinrichtung (40) angeordnet ist, wobei die Rotationseinrichtung (50) und das Arbeitsmittel (10) oder das Gehäuse (30) vorzugsweise synchron um die Längsachse (LA) der Befestigungseinrichtung (40) rotierbar sind.

5. Ablenkeinrichtung nach einem der vorhergehenden Ansprüche, wobei das Zugmittel (25) ein Zugseil umfasst.

6. Ablenkeinrichtung nach einem der vorhergehenden Ansprüche 2 bis 5, wobei die Rotationseinrichtung (50) axial bewegbar (P5) an dem zweiten Ende (40b) der Befestigungseinrichtung (40) angeordnet ist.

7. Ablenkeinrichtung nach einem der vorhergehenden Ansprüche 2-6, wobei an der Befestigungseinrichtung (40) zwischen der Rotationseinrichtung (50) und dem ersten Ende (40a) ein Anschlag (41) angeordnet ist, der die axiale Bewegung der Rotationseinrichtung (50) in Richtung Arbeitsmittel (10) begrenzt.

8. Ablenkeinrichtung nach einem der vorhergehenden Ansprüche, wobei ein Schwenken der Schwenkeinrichtung (20) um die Schwenkachse (21) ein Auslenken (P1) des ersten Endes (40a) der Befestigungseinrichtung (40) aus der Längsachse (LA) der Inspektionseinrichtung (1) bewirkt.

9. Ablenkeinrichtung nach einem der vorhergehenden Ansprüche, wobei die Befestigungseinrichtung (40) eine Rückstellkraft aufweist, die entgegen einer durch ein Schwenken der Schwenkeinrichtung (20) um die Schwenkachse (21) bewirkten Auslenkkraft wirkt.

10. Ablenkeinrichtung nach einem der vorhergehenden Ansprüche, wobei die Befestigungseinrichtung (40) als Stab ausgebildet ist.

11. Ablenkeinrichtung nach einem der vorhergehenden Ansprüche, wobei diese
- eine erste Antriebseinheit aufweist, um die Schwenkeinrichtung (20) um die Schwenkachse (21) relativ zum Gehäuse (30) zu schwenken, und/oder
- eine zweite Antriebseinheit aufweist, um das Arbeitsmittel (10) oder das Gehäuse (30) um die Längsachse (LA) der Befestigungseinrichtung (40) zu rotieren.

12. Inspektions- und/oder Wartungssystem, insbesondere Kanalinspektions- und/oder Wartungssystem, aufweisend eine Ablenkeinrichtung nach einem der vorhergehenden Ansprüche.

13. Inspektions- und/oder Wartungssystem nach dem vorhergehenden Anspruch, wobei dieses als Schiebesystem ausgebildet ist, wobei an einem vorderen Ende eines Schiebestabes (60) oder eines Schiebeaals die Ablenkeinrichtung angeordnet, vorzugsweise lösbar angeordnet ist.

## Claims

1. A deflection device of an inspection device (1), wherein the deflection device has:
- a working appliance (10) having a main body (30) and a pivoting device (20),
- a flexible fastening device (40) having a first end (40a) and a second end (40b), said main body (30) being preferably arranged on said first end (40a) in a detachable manner, and
- a pulling means (25) having a first end (25a) and a second end (25b), said first end (25a) of said pulling means (25) being fastened to the pivoting device (20),
**characterised in that**
- the second end (25b) of the pulling means (25) is fastened to the fastening device (40) in the region of the second end (40b) thereof,
- the main body (30) comprises a camera housing (30), the pivoting device (20) being arranged on or in said camera housing (30) in such a manner as to be pivotable (P2) about a pivot axis (21) relative to the camera housing (30), and
- the working appliance (10) comprises a camera head, said pivoting device (20) having an objective lens and an image capturing unit.

2. The deflection device as claimed in the preceding claim, wherein the second end (40b) of the fastening device (40) has a rotation device (50) arranged thereon and wherein the second end (25b) of the pulling means (25) is fastened, preferably in a detachable manner, to the rotation device (50).

3. The deflection device as claimed in any of the preceding claims, wherein the working appliance (10) or the housing (30) is arranged on the fastening device (40) in such a manner as to be rotatable (P3) about the longitudinal axis (LA) of said fastening device (40).

4. The deflection device as claimed in any one of claims 2 or 3, wherein the rotation device (50) is arranged on the fastening device (40) in such a manner as to be rotatable (P4) about the longitudinal axis (LA) of said fastening device (40), wherein the rotation device (50) and the working appliance (10) or the housing (30) are rotatable, preferably in a synchronous manner, about the longitudinal axis (LA) of the fastening device (40).

5. The deflection device as claimed in any of the preceding claims, wherein the pulling means (25) comprises a pull cable.

6. The deflection device as claimed in any one of the preceding claims 2 to 5, wherein the rotation device (50) is arranged on the second end (40b) of the fastening device (40) in such a manner as to be axially movable (P5).

7. The deflection device as claimed in any one of the preceding claims 2 to 6, wherein the fastening device (40) has a stop (41) provided thereon which is arranged between the rotation device (50) and the first end (40a) and limits axial movement of the rotation device (50) in the direction of the working appliance (10).

8. The deflection device as claimed in any of the preceding claims, wherein a pivotal movement of the pivoting device (20) about the pivot axis (21) causes a deflection (P1) of the first end (40a) of the fastening device (40) with respect to the longitudinal axis (LA) of the inspection device (1).

9. The deflection device as claimed in any of the preceding claims, wherein the fastening device (40) has a restoring force which is opposed to a deflection force caused by a pivotal movement of the pivoting device (20) about the pivot axis (21).

10. The deflection device as claimed in any of the preceding claims, wherein the fastening device (40) is shaped in the form of a rod.

11. The deflection device as claimed in any of the preceding claims, wherein said device
- has a first drive unit in order to pivot the pivoting device (20) about the pivot axis (21) relative to the housing (30), and/or
- has a second drive unit in order to rotate the working appliance (10) or the housing (30) about the longitudinal axis (LA) of the fastening device (40).

12. An inspection and/or maintenance system, in particular a sewer inspection and/or sewer maintenance system, having a deflection device as claimed in any of the preceding claims.

13. The inspection and/or maintenance system as claimed in the preceding claim, wherein said system is realised as a pushing system, the deflection device being arranged on a front end of a pushing rod (60) or of a flexible rod, preferably so in a detachable manner.

## Revendications

1. Dispositif déflecteur d'un dispositif d'inspection (1), le dispositif déflecteur présentant :
- un moyen de travail (10) pourvu d'un corps de base (30) et d'un dispositif de pivotement (20),
- un dispositif de fixation souple (40) pourvu d'une première extrémité (40a) et d'une deuxième extrémité (40b), le corps de base (30) étant disposé de préférence de manière amovible sur la première extrémité (40a), et
- un moyen de traction (25) pourvu d'une première extrémité (25a) et d'une deuxième extrémité (25b), la première extrémité (25a) du moyen de traction (25) étant fixée sur le dispositif de pivotement (20),
**caractérisé en ce que**
- la deuxième extrémité (25b) du moyen de traction (25) est fixée dans la zone de la deuxième extrémité (40b) du dispositif de fixation (40),
- le corps de base (30) comprend un boîtier de caméra (30), le dispositif de pivotement (20) étant disposé sur ou dans le boîtier de caméra (30) de manière à pouvoir pivoter (P2) autour d'un axe de pivotement (21) par rapport au boîtier de caméra (30), et
- le moyen de travail (10) présente une tête de caméra, le dispositif de pivotement (20) présentant un objectif et un imageur.

2. Dispositif déflecteur selon la revendication précédente, dans lequel un dispositif de rotation (50) est disposé sur la deuxième extrémité (40b) du dispositif de fixation (40), et dans lequel la deuxième extrémité (25b) du moyen de traction (25) est fixée de préférence de manière amovible sur le dispositif de rotation (50).

3. Dispositif déflecteur selon l'une quelconque des revendications précédentes, dans lequel le moyen de travail (10) ou le boîtier (30) est disposé sur le dispositif de fixation (40) de manière à pouvoir tourner (P3) autour de l'axe longitudinal (LA) dudit dispositif de fixation (40).

4. Dispositif déflecteur selon l'une quelconque des revendications 2 ou 3, dans lequel le dispositif de rotation (50) est disposé sur le dispositif de fixation (40) de manière à pouvoir tourner (P4) autour de l'axe longitudinal (LA) dudit dispositif de fixation (40), le dispositif de rotation (50) et le moyen de travail (10) ou le boîtier (30) pouvant tourner de préférence de manière synchrone autour de l'axe longitudinal (LA) du dispositif de fixation (40).

5. Dispositif déflecteur selon l'une quelconque des revendications précédentes, dans lequel le moyen de traction (25) comprend un câble de traction.

6. Dispositif déflecteur selon l'une quelconque des revendications précédentes 2 à 5, dans lequel le dispositif de rotation (50) est disposé sur la deuxième extrémité (40b) du dispositif de fixation (40) de manière à pouvoir bouger axialement (P5).

7. Dispositif déflecteur selon l'une quelconque des revendications précédentes 2 à 6, dans lequel sur le dispositif de fixation (40), entre le dispositif de rotation (50) et la première extrémité (40a), est disposée une butée (41) qui limite le mouvement axial du dispositif de rotation (50) en direction du moyen de travail (10).

8. Dispositif déflecteur selon l'une quelconque des revendications précédentes, dans lequel un pivotement du dispositif de pivotement (20) autour de l'axe de pivotement (21) fait dévier (P1) la première extrémité (40a) du dispositif de fixation (40) par rapport à l'axe longitudinal (LA) du dispositif d'inspection (1).

9. Dispositif déflecteur selon l'une quelconque des revendications précédentes, dans lequel le dispositif de fixation (40) présente une force de rappel qui agit contre une force de déviation générée par un pivotement du dispositif de pivotement (20) autour de l'axe de pivotement (21).

10. Dispositif déflecteur selon l'une quelconque des revendications précédentes, dans lequel le dispositif de fixation (40) est réalisé sous forme de tige.

11. Dispositif déflecteur selon l'une quelconque des revendications précédentes, dans lequel ledit dispositif
- présente une première unité d'entraînement afin de faire pivoter le dispositif de pivotement (20) autour de l'axe de pivotement (21) par rapport au boîtier (30), et/ou
- présente une deuxième unité d'entraînement afin de faire tourner le moyen de travail (10) ou le boîtier (30) autour de l'axe longitudinal (LA) du dispositif de fixation (40).

12. Système d'inspection et/ou de maintenance, en particulier système d'inspection et/ou de maintenance de canalisation, lequel présente un dispositif déflecteur selon l'une quelconque des revendications précédentes.

13. Système d'inspection et/ou de maintenance selon la revendication précédente, dans lequel ledit système est réalisé sous forme de système poussoir, le dispositif déflecteur étant disposé, de préférence de manière amovible, sur une extrémité avant d'une tige poussoir (60) ou d'une canne flexible.
